(19) **Europäisches Patentamt / European Patent Office / Office européen des brevets**

(11) **EP 3 255 447 A1**

(12) **EUROPEAN PATENT APPLICATION**
published in accordance with Art. 153(4) EPC

(43) Date of publication:
**13.12.2017 Bulletin 2017/50**

(51) Int Cl.:
***G01S 1/70*** (2006.01)      ***G01S 5/16*** (2006.01)

(21) Application number: **16746059.1**

(22) Date of filing: **08.01.2016**

(86) International application number:
**PCT/CN2016/070465**

(87) International publication number:
**WO 2016/124064 (11.08.2016 Gazette 2016/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.02.2015 CN 201520086232 U**

(71) Applicant: **Chigoo Interactive Technology Co., Ltd.**
**Xinwu District**
**Wuxi**
**Jiangsu 214028 (CN)**

(72) Inventors:
• **CHEN, Tao**
**Wuxi**
**Jiangsu 214028 (CN)**
• **PAN, Chuanrong**
**Wuxi Jiangsu 214028 (CN)**
• **LU, Haiyang**
**Wuxi Jiangsu 214028 (CN)**

(74) Representative: **Molinari, Marinella et al**
**Luppi Crugnola & Partners S.r.l.**
**Viale Corassori, 54**
**41124 Modena (IT)**

(54) **INFRARED RAY POSITIONING NODE DEVICE AND SYSTEM**

(57)     An infrared ray positioning node device is disclosed, including a reflection cup with a plurality of side surfaces; and an infrared ray emitting tube cooperating with the reflection cup and being positioned so that the range of an included angle m formed after the rays emitted by the infrared ray emitting tube reflect off some reflection side surfaces in the plurality of side surfaces is 0°≤m<180°. An infrared ray positioning node system is also disclosed. The present invention makes the direction of an infrared ray emission signal controllable in the range of 0° - 180°, makes the signal stable and even in intensity, improves the radiation utilization of the infrared ray emitting tube, reduces the power consumption of the node device, realizes uniform projection of infrared light, and effectively avoids emission blind areas of a single node and signal interference between adjacent nodes.

Fig. 3

EP 3 255 447 A1

**Description**

TECHNICAL FIELD

The present invention relates to a wireless signal emitting device and system and in particular to an infrared ray positioning node device and system.

BACKGROUND

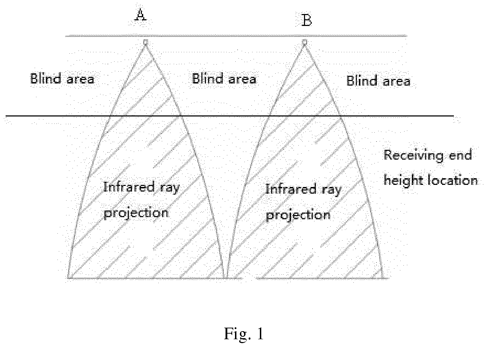

With the development of wireless network technologies, it is desirous to identify an object and perform precise positioning with wireless signals. For example, in an environment such as an airport which passengers gather in and are unfamiliar with, a convenient and precise positioning is much more needed. Indoor positioning in the prior art usually performs ID identification on a target object by a positioning node device emitting wireless signals. An ideal state is that one positioning node corresponds to one ID. When one receiving terminal passes through a projection area of one positioning node device, it will receive one signal ID only; and when it passes through another positioning node device, it will receive the ID of the other positioning node device. A currently widely used node positioning device usually includes a signal emission tube and a circuit board. For example, signals emitted by the ID identification device described in Chinese patent No. 200820049054.7 are emitted to the surroundings without limitation. When this device is suspended, the projection area of the emitted signal will display a conic shape as shown in Fig. 1. Fig. 1 is a view of an infrared ray projection region of a traditional infrared ray positioning node device. Node positioning devices A and B are both suspended over the ceiling and form a conic infrared ray projection area respectively. As shown in Fig. 1, a relatively large signal blind area is formed between the infrared ray projection areas of positioning nodes A and B. It can predicted that when the distance between A and B is narrowed, although the signal blind area therebetween will be narrowed, the conic infrared ray projection areas formed between positioning nodes A and B will overlap, thereby resulting a signal blind area and an area with non-uniform signal intensity. In order to accurately identify an object and perform precise positioning, it is necessary to define the infrared ray signal projection area so as to overcome defects of weak signals, non-uniform in signal intensity and poor signal directivity.

SUMMARY

An object of the present invention is to provide an infrared ray positioning node device and system which is capable of providing stable signals, uniform signal intensity and good signal directivity.

According to an aspect of the present invention, an infrared ray positioning node device is provided, comprising: a reflection cup with a plurality of side surfaces; and an infrared ray emitting tube cooperating with the reflection cup and being positioned so that the range of an included angle m formed after rays emitted by the infrared ray emitting tube reflect off some reflection side surfaces in the plurality of side surfaces is $0° \leq m < 180°$.

According to an aspect of the present invention, an infrared ray positioning node system is provided, comprising a plurality of infrared ray positioning node devices which are configured so that the infrared ray emitting directions of some infrared ray positioning node devices s are perpendicular to those of the remaining infrared ray positioning node devices.

According to the present invention, the range of the infrared ray emitting signal is controllable within a range from 0° to 180°, so that the emitted signal is stable and has uniform intensity. The radiation utilization of the infrared ray emitting tube is improved and the power consumption of the node device is reduced. Uniform projection of the infrared light can be realized which effectively avoids blind areas of emission of a single node and signal interference between adjacent nodes.

BRIEF DESCRIPTION OF THE DRAWINGS

Fig. 1 is a view of an infrared ray projection region of a traditional infrared ray positioning node device;
Fig. 2 is a structure view of an infrared ray positioning node device according to an embodiment of the present invention;
Fig. 3 is a structure view of a reflection cup according to an embodiment of the present invention;
Fig. 4 is a vertical installation view of an infrared ray positioning node device according to an embodiment of the present invention;
Fig. 5 is a perspective view showing vertical installation of an infrared ray positioning node system according to an embodiment of the present invention;

Fig. 6 is a schematic view showing horizontal installation of an infrared ray positioning node device according to an embodiment of the present invention; and

Fig. 7 is a schematic view showing a horizontal and vertical hybrid installation of an infrared ray positioning node device according to an embodiment of the present invention.

DETAILED DESCRIPTION

The present invention will be described further in detail in conjunction with the accompanying drawings hereinafter.

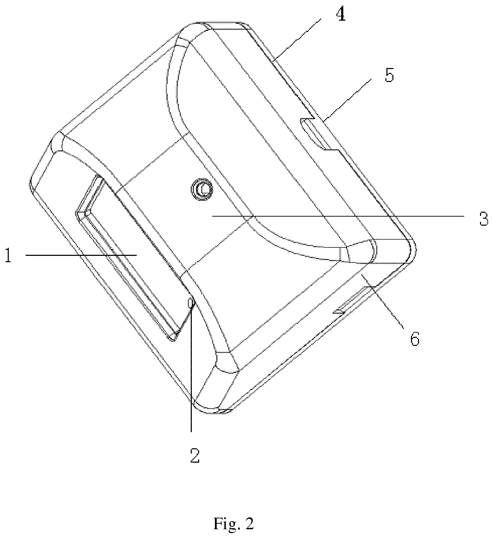

Fig. 2 schematically shows an infrared ray positioning node device according to an embodiment of the present invention. As shown, the device includes a reflection cup 1 (the main body structure thereof is located in a housing), an infrared ray emitting tube 2, a central control point 3, a housing 4, a power interface 5 and an upgrade interface 6.

In this embodiment, the central control point 3 may be a circuit board integrated with a power source, a microprocessor, a wireless module and a photosensitive element. It can be used to provide power supply to the infrared ray positioning node device, receive signals , process signals, and send signals (such as infrared ray signals) to the infrared ray positioning node device. In particular, the power source is connected to the power interface 6. The power source supplies power to the infrared ray positioning node device. The microprocessor is connected to the upgrade interface 6. The microprocessor processes the received signals and may upgrade a program, so that communication and data upgrade may be performed through infrared ray signals, which increases the utility performance, convenience and functionality of the device.

The central control point 3 is provided with a light hole providing light to the photosensitive element. The photosensitive element senses the ambient light through the light hole and automatically adjusts the intensity of the infrared ray emitted by the infrared ray emitting tube 2, improving the radiation utilization of the infrared ray emitting tube and reducing the power consumption of the infrared ray positioning node device. In addition, the housing 4 may be of a box shape (and may also be other shapes suitable for fabricating) to accommodate the reflection cup 1, the infrared ray emitting tub 2 and the central control point 3 and is left with a groove matching with the power interface 5 and the upgrade interface 6 and a rectangular opening matching with the reflection cup 1. The housing 4 is provided with groove positions or small holes for installing the reflection cup 1 at different angles. The reflection cup 1 has a function of reflecting infrared rays, and the unique structure of which can make the reflected infrared ray projected uniformly in a space of $0° \leq X < 180°$.

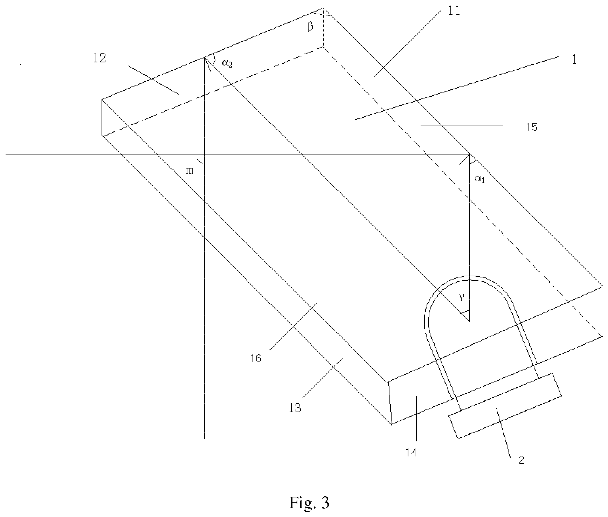

Fig. 3 shows the structure of a reflection cup 1 according to an embodiment of the present invention. As shown in Fig. 3, the shape of the reflection cup 1 is a cuboid (a parallel hexahedron with its side edges being perpendicular to its bottom surface) which includes an upper bottom surface 15, a lower bottom surface 16, a first reflection side surface 11, a second reflection side surface 12, a third transmitting side surface 13, a fourth side surface 14 and an infrared ray emitting tube 2. The upper bottom surface 15 may be of a parallelogram shape. The lower bottom surface 16 may also be of a parallelogram shape. The first reflection side surface 11 and the second reflection side surface 12 which are adjacent to each other may form a first included angle $\beta$. The third transmitting side surface 13 may be of a rectangular shape and may be opposite to the first reflection side surface 11 and adjacent to the second reflection side surface 12. The fourth side surface 14 may be of a rectangular shape and may be adjacent to the first reflection side surface 11 and the third transmitting side surface 13 respectively. The radiation range of the infrared ray emitting tube 2 for matching with the reflection cup 1 is determined by a second included angle $\gamma$ formed by a first edge ray and a second edge ray. The infrared ray emitting tube 2 is positioned so that the first edge ray radiates the first reflection side surface 11 at a first incidence angle $\alpha_1$ and the second edge ray radiates the second reflection side surface 12 at a second incidence angle $\alpha_2$, $\alpha_2 = 180° + \alpha_1 - \beta - \gamma$. An included angle m between a first reflection ray of the first edge ray from the first reflection side surface and a second reflection ray of the second edge ray from the second reflection side surface (called reflection included angle m) is $m = 360° - 2\beta - \gamma3$ wherein the first incidence angle $\alpha_1 < 900°$, the second incidence angle $\alpha_2 < 90°$, and the reflection included angle $0° \leq m < 180°$.

According to the basic properties of the planar figure (for example, the sum of the three angles of a triangle is 180°, and the sum of the four angles of a quadrangle is 360°), the expressions of various angles can be deduced:

$$m = 180° - (180° - \gamma - 180° - 2\alpha_1) - [180° - 2*(360° - \gamma - (180° - \alpha_1) - \beta]$$
$$= 360° - 2\beta - \gamma$$

$$m=180°-(180°-2\alpha_2)-[180°-\gamma-(180°-2\alpha_1)]$$
$$=2(\alpha_2-\alpha_1)+\gamma$$

$$\beta=360°-\alpha_2-\gamma-(180°-\alpha_1)$$
$$=180°-\alpha_2-\gamma+\alpha_1$$

$$\alpha_2=360°-\beta-\gamma-(180°-\alpha_1)$$
$$=180°+\alpha_1-\beta-\gamma$$

By means of the installation method for matching the reflection cup bottom with the infrared ray emitting tube disclosed above, the reflected infrared ray is uniformly projected in a space of $0°\leq X< 180°$.

By means of experiments and calculations, when the reflection cup is designed to have any of the following two special configurations, the reflected infrared ray can be projected uniformly in a space of 90°, forming a rectangular parallelepiped infrared light beam:

Configuration I: the first included angle $\beta$ is 112.5°, the second included angle $\gamma$ is 45°, the first incidence angle $\alpha_1$ is 45°, and the second incidence angle $\alpha_2$ is 67.5°; and

Configuration II: the first included angle $\beta$ is 90°, the second included angle $\gamma$ is 90°, the first incidence angle $\alpha_1$ is 67.5°, and the second incidence angle $\alpha_2$ is 67.5°.

When the reflection cup is configured in the above manner, the first reflection light ray and the second reflection light ray formed after the first edge light ray and the second edge light ray are reflected by the first reflection side surface and the second reflection side surface form a rectangular parallelepiped infrared light beam with an angle of 90°. The structure of the above infrared ray positioning node device makes the projected infrared light beam rectangular parallelepiped, reducing signal blind areas and making signal intensity even and stable.

In addition, it should be noted that this embodiment adopts one infrared ray emitting tube to schematically reflect the light ray refraction effect. For those skilled in the art, in order to increase the intensity of the infrared ray signals, a plurality of infrared ray emitting tubs may be provided in the housing, which may be in particular provided on the upper portion, the lower portion or the inner side of the reflection cup.

Thus, by uniquely providing a reflection cup in the above infrared ray positioning node device, the direction of the infrared ray emitting signal is controllable, the signal is stable and intensity thereof is uniform, the radiation utilization of the infrared ray emitting tube is improved, the power consumption of the node device can be reduced, a uniform projection of infrared light can be realized, and emission blind areas of a single node and signal interference between adjacent nodes can be effectively avoided.

In some embodiment, the shape of the reflection cup 1 is a cuboid including an upper bottom surface 15 of a parallelogram shape, a lower bottom surface 16 of a parallelogram shape and a fourth side surface 14 of a rectangle shape which adjoins the first reflection side surface 11 and the third transmitting side surface 13 respectively. Such a design is simple and convenient to process.

In some embodiments, the upper bottom surface 15, the lower bottom surface 16 and the fourth side surface 14 are coated with a light absorption material. At least one hole for accommodating the infrared ray emitting tube is provided on the fourth side surface 14 or on the lower bottom surface 16 adjacent to the fourth side surface 14. The bulbs of the infrared ray emitting tube are installed in the corresponding holes of size and number matching therewith. The structure of the above infrared ray positioning node device makes the infrared ray emitting tube directly radiate the reflection surface with few infrared ray dispersion losses and good reflection effect.

In some embodiments, there are many mating installation methods for the infrared ray emitting tube and the reflection cup: both the upper bottom surface 15 and the fourth side surface 14 are light absorption surfaces, the lower bottom surface 16 is a transmitting surface, the outside of the reflection cup is a central control point, and the infrared ray emitting tube is connected to the central control point and located underneath the lower bottom surface 16. Or, the upper bottom surface 15 and the lower bottom surface 16 are both light absorption surfaces, the fourth side surface 14 is a transmitting surface, and the infrared ray emitting tube is connected to the central control point and located outside the fourth side surface. In the structures of the above two infrared ray positioning node devices, the infrared ray emitting tube is installed outside the reflection cup without piercing the reflection cup, which is not only simple in fabricating but also convenient for installation.

In some embodiments, the main body of the reflection cup is a solid structure made of a transmitting material. Such a structure makes it convenient to coat a light absorption or reflection material on various side surfaces as desired, which not only makes the processing simple but also reliable in quality. For those skilled in the art, the infrared ray emitting tube is installed outside the reflection cup, for example, installed on the upper portion, the lower portion of the reflection cup or the outside of the fourth side surface, which merely requires to change the light absorption material or transmitting material accordingly, so that the incidence surface of the infrared ray emitted by the infrared ray emitting tube and the third rectangular transmitting side surface 13 of the reflection cup from which the infrared ray is reflected are of a transmitting material, the first reflection surface 11 and the second reflection surface 12 are of a reflection material, and the other surfaces are of a light absorption material.

The infrared ray positioning node device in the present invention is designed to have a box shape, which makes it more convenient for installation. An infrared ray positioning node system consisting of a plurality of infrared ray positioning node devices brings up different technical effects through different installation methods during installation.

For example, it can be configured that the infrared ray emitted from some infrared ray positioning node devices is perpendicular to that from the remaining infrared ray positioning node devices. Or, a distance between each of some infrared ray positioning node devices is set so that no overlapped radiation region exists among these infrared ray positioning node devices, and a distance between each of the remaining infrared ray positioning node devices is set so that no overlapped radiation region exists among the remaining infrared ray positioning node devices.

The above illustrated hexahedron reflection cup merely schematically illustrates an effect of the infrared ray incidence and reflection, while the calculation of various angles are relatively simple. For those skilled in the art, various changes may be made to the shape of the reflection cup. For example, the upper bottom surface and the lower bottom surface are configured as trapezoid or pentagon and the like. There may be a plurality of side surfaces, as long as the following requirements are satisfied: after the light rays emitted by the infrared ray emitting tube are reflected by some reflection side surfaces in the plurality of side surface, the range of an included angle m formed between the reflected rays from different reflection side surfaces is $0° \leq m < 180°$.

In some embodiments, the plurality of side surfaces of the reflection cup may include: a first reflection side surface and a second reflection side surface adjacent to each other and forming a first included angle $\beta$; and a third transmitting side surface opposite to the first reflection side surface and adjacent to the second reflection side surface.

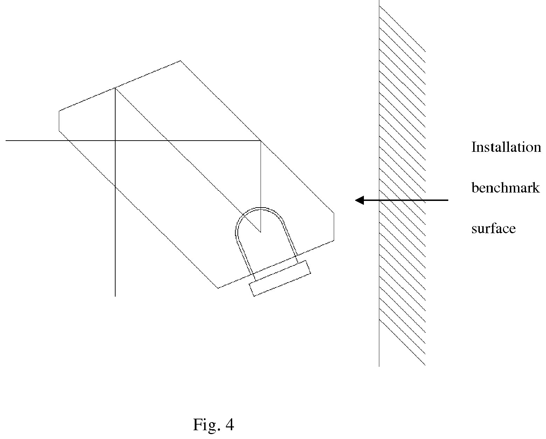

Figs. 4 to 7 schematically show some typical installation methods of an infrared ray positioning node device (or system).

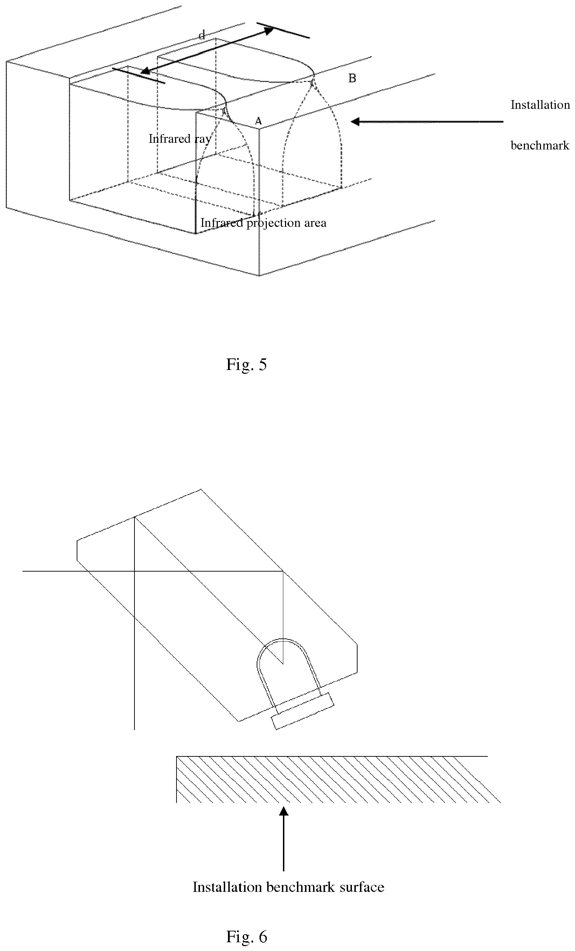

Fig. 4 shows an infrared ray positioning node device being installed on a vertical benchmark surface. Fig. 5 shows a perspective view of the installation method in Fig. 4. As shown in Fig. 5, an infrared ray positioning node system (including infrared ray positioning node devices A and B) is installed on an indoor wall (such as a waiting room of an airport).

In use, the infrared ray positioning node devices A and B form perspective infrared ray signal projection areas in the waiting room of the airport respectively which form rectangular projection sections on the wall and the floor respectively. The infrared ray positioning node devices A and B may also communicate information with each other through the microprocessors and wireless modules therein so that these devices are more powerful and more convenient in use. In addition, large-span positioning and identification can be realized by installing several nodes. That is, the projection width d in the figure is controlled by changing the number of nodes. By means of this typical batch installation method, the signal intensity may be uniform and the receiving may be stable and reliable, reducing signal blind areas significantly in the emission range.

In this embodiment, the infrared ray positioning node devices A and B are arranged in parallel, which can save the number of infrared ray positioning node devices.

In order to further reduce signal blind areas, it can be configured that the infrared ray emitted from some infrared ray positioning node devices is perpendicular to that from the remaining infrared ray positioning node devices. A distance between each of some infrared ray positioning node devices is set so that no overlapped radiation region exists among these infrared ray positioning node devices, and a distance between each of the remaining infrared ray positioning node devices is set so that no overlapped radiation region exists among the remaining infrared ray positioning node devices..

In the infrared ray positioning node device and system disclosed in the present invention, the reflection cup has a function of reflecting infrared rays. The unique structure thereof can make the emitted infrared light projected uniformly in space. The housing of the nodes has a groove position for the best installation angle of the reflection cup.

During normal installation of the node, the section of the infrared light emitted from the node is rectangular, that is, having infrared light radiation in horizontal forward and vertical downward range, uniform intensity, stable and reliable receiving, so that the signal reception has no blind area in the emission range. At the same time, the photosensitive element in the node can automatically adjust the intensity of the emitted infrared light by sensing the ambient light.

Fig. 6 shows an infrared ray positioning node device being installed on a horizontal benchmark surface. For example, it is installed on the ceiling or floor of a waiting room of an airport. Due to the special design of the reflection cup and light-emitting opening of the infrared ray positioning node device in the present invention, the emitted infrared ray has a rectangular section, that is, having infrared light radiation in horizontal forward and vertical downward range, uniform intensity, stable and reliable receiving, so that the signal blind area is reduced to the greatest extent in the infrared ray radiation emission range.

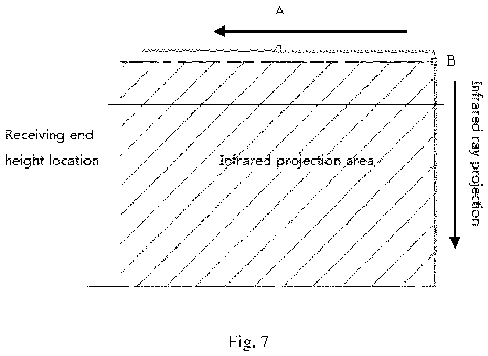

Fig. 7 shows a hybrid installation method based on two installation methods shown in Figs. 4 and 6, that is, a vertical and horizontal hybrid installation method. As shown in Fig. 7, by means of such a vertical and horizontal hybrid installation method, in addition to a very good reception effect of a single infrared ray positioning node device, signal blind area hardly exists, thus forming an infrared ray projection area with uniform infrared ray intensity covered by a rectangular section with the signal blind area completely eliminated in the projection area.

The foregoing is merely some embodiments of the present invention. For a person skilled in the art, variations and modifications may be made without departing from the inventive concept of the present invention, which all fall into the protection scope of the present invention.

**Claims**

1. An infrared ray positioning node device, comprising:

   a reflection cup having a plurality of side surfaces; and
   an infrared ray emitting tube cooperating with the reflection cup and being positioned so that the range of an included angle m formed after the rays emitted by the infrared ray emitting tube reflect off some reflection side surfaces in the plurality of side surfaces is $0° \leq m < 180°$.

2. The device according to claim 1, wherein the plurality of side surfaces of the reflection cup include:

   a first reflection side surface and a second reflection side surface adjacent to each other and forming a first included angle $\beta$; and
   a rectangular third transmitting side surface opposite to the first reflection side surface and adjacent to the second reflection side surface.

3. The device according to claim 2, wherein:

   the radiation range of the infrared ray emitting tube is determined by a second included angle $\gamma$ formed by a first edge ray and a second edge ray, the first edge ray radiates the first reflection side surface at a first incidence angle $\alpha1$, and the second edge ray radiates the second edge ray at a second incidence angle $\alpha2$, wherein $\alpha2 = 180° + \alpha1 - \beta - \gamma$; and the reflection included angle m between a first reflection ray of the first edge ray from the first reflection side surface and a second reflection ray of the second edge ray from the second reflection side surface is $m = 360° - 2\beta - \gamma$,
   wherein,
   the first incidence angle $\alpha1 < 90°$; and
   the second incidence angle $\alpha2 < 90°$.

4. The device according to claim 2, wherein the first included angle $\beta$ is 112.5°, the second included angle $\gamma$ is 45°, the first incidence angle $\alpha1$ is 45°, and the second incidence angle is 67.5°.

5. The device according to claim 2, wherein the first included angle $\beta$ is 90°, the second included angle $\gamma$ is 90°, the first incidence angle $\alpha1$ is 67.5°, and the second incidence angle is 67.5°.

6. The device according to any one of claims 1 to 5, wherein the shape of the reflection cup is a cuboid including an upper bottom surface of a parallelogram shape, a lower bottom surface of a parallelogram shape and a fourth side surface of a rectangle shape which is adjacent to the first reflection side surface and the third transmitting side surface respectively.

7. The device according to claim 6, wherein the upper bottom surface, the lower bottom surface and the fourth side surface are coated with a light absorption material, and at least one hole for accommodating the infrared ray emitting tube is provided on the fourth side surface or the lower bottom surface adjacent to the fourth side surface.

8. The device according to claim 6, wherein the upper bottom surface and the fourth side surface are both light absorption surfaces, the lower bottom surface is a transmitting surface, the device further includes a central control point located at the outer side of the reflection cup, and the infrared ray emitting tube is connected to the central control point and located underneath the lower bottom surface.

9.   The device according to claim 6, wherein the upper bottom surface and the lower bottom surface are both light absorption surfaces, the fourth side surface is a transmitting surface, the device further includes a central control point located at the outer side of the reflection cup, and the infrared ray emitting tube is connected to the central control point and located outside the fourth side surface.

10.   The device according to any one of claims 7 to 9, wherein the main body of the reflection cup has a solid structure made of a transmitting material.

11.   The device according to any one of claims 7 to 9, wherein the reflection cup has a box shape.

12.   An infrared ray positioning node system, comprising a plurality of infrared ray positioning node devices according to any one of claims 1 to 11, wherein some infrared ray positioning node devices and the remaining infrared ray positioning node devices are configured so that the infrared ray emitting directions thereof are perpendicular to each other.

13.   The system according to claim 12, wherein a distance between each of some infrared ray positioning node devices is set so that no overlapped radiation regions exists among respective infrared ray positioning node devices, and a distance between each of the remaining infrared ray positioning node devices is set so that no overlapped radiation region exists among respective infrared ray positioning node devices.

A    B

Blind area    Blind area    Blind area

Receiving end
height location

Infrared ray
projection    Infrared ray
projection

Fig. 1

Fig. 2

Fig. 3

Installation

benchmark

surface

Fig. 4

Installation

benchmark

Infrared ray

B

A

Infrared projection area

Fig. 5

Installation benchmark surface

Fig. 6

Fig. 7

# INTERNATIONAL SEARCH REPORT

| International application No. |
|---|
| **PCT/CN2016/070465** |

## A. CLASSIFICATION OF SUBJECT MATTER

G01S 1/70 (2006.01) i; G01S 5/16 (2006.01) i

According to International Patent Classification (IPC) or to both national classification and IPC

## B. FIELDS SEARCHED

Minimum documentation searched (classification system followed by classification symbols)

G01S 1/-; G01S 5/-; F21V 3/-; F21V 7/-

Documentation searched other than minimum documentation to the extent that such documents are included in the fields searched

Electronic data base consulted during the international search (name of data base and, where practicable, search terms used)

CNPAT, CNKI, WPI, EPODOC: CHIGOO INTERACTIVE TECHNOLOGY CO., LTD.; CHEN, Tao; PAN, Chuanrong; LU, Haiyang; reflect light, infrared, position+, locat+, reflect+, parallelepiped, box??, cube, cuboid, uniform+, overlap+

## C. DOCUMENTS CONSIDERED TO BE RELEVANT

| Category* | Citation of document, with indication, where appropriate, of the relevant passages | Relevant to claim No. |
|---|---|---|
| PX | CN 204462375 U (CHIGOO INTERACTIVE TECHNOLOGY CO., LTD.), 08 July 2015 (08.07.2015), description, paragraphs 0004-0055, and figures 1-7 | 1-13 |
| Y | CN 202153315 U (CHIGOO INTERACTIVE TECHNOLOGY CO., LTD.), 29 February 2012 (29.02.2012), description, paragraph 0014, and figure 1 | 1, 2, 6-13 |
| Y | CN 202361136 U (JOHNPHIL TECHNOLOGY CORP.), 01 August 2012 (01.08.2012), description, paragraphs 0026-0033 and 0038, and figures 1-3 | 1, 2, 6-13 |
| Y | CN 104007412 A (CHONGQING GUANGJIAN DESIGN & DECORATION ENGINEERNG CO., LTD.), 27 August 2014 (27.08.2014), description, paragraph 0019 | 13 |
| A | WO 2013105046 A1 (KONINKLIJKE PHILIPS N.V.), 18 July 2013 (18.07.2013), the whole document | 1-13 |
| A | US 2010321919 A1 (INTEMATIX CORPORATION), 23 December 2010 (23.12.2010), the whole document | 1-13 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 March 2016 (15.03.2016) | **31 March 2016 (31.03.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **SUN, Xueting** Telephone No.: (86-10) **82245897** |

Form PCT/ISA/210 (second sheet) (July 2009)

**INTERNATIONAL SEARCH REPORT**
Information on patent family members

| International application No. |
| --- |
| **PCT/CN2016/070465** |

| Patent Documents referred in the Report | Publication Date | Patent Family | Publication Date |
| --- | --- | --- | --- |
| CN 204462375 U | 08 July 2015 | None | |
| CN 202153315 U | 29 February 2012 | None | |
| CN 202361136 U | 01 August 2012 | None | |
| CN 104007412 A | 27 August 2014 | None | |
| WO 2013105046 A1 | 18 July 2013 | US 2015003055 A1 | 01 January 2015 |
| | | JP 2015505149 A | 16 February 2015 |
| | | EP 2802805 A1 | 19 November 2014 |
| | | CN 104040242 A | 10 September 2014 |
| | | US 9279547 B2 | 08 March 2016 |
| US 2010321919 A1 | 23 December 2010 | WO 2010148129 A1 | 23 December 2010 |
| | | CN 102460003 A | 16 May 2012 |
| | | EP 2443385 A1 | 25 April 2012 |
| | | KR 20120042845 A | 03 May 2012 |
| | | JP 2012531047 A | 06 December 2012 |
| | | TW 201129761 A | 01 September 2011 |
| | | US 8651692 B2 | 18 February 2014 |

Form PCT/ISA/210 (patent family annex) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200820049054